# FASCICULE DE BREVET EUROPEEN

(11) **EP 0 892 899 B1**
(45) Date de publication et mention de la délivrance du brevet: **31.10.2001**
(21) Numéro de dépôt: 98908187.2
(22) Date de dépôt: 13.02.1998
(51) Int. Cl.: F16F 15/123

(54) **MOYEU POUR PREAMORTISSEUR NOTAMMENT POUR VEHICULE AUTOMOBILE ET DISPOSITIF AMORTISSEUR DE TORSION COMPORTANT UN TEL MOYEU**
NABE FÜR VORDÄMPFER,INSBESONDERE FÜR KRAFTFAHZZEUG, UND TORSIONSDÄMPFUNGSVORRICHTUNG MIT DERSELBEN
HUB FOR PRELIMINARY SHOCK ABSORBER IN PARTICULAR FOR MOTOR VEHICLE, AND TORQUE DAMPING DEVICE COMPRISING SAME

(30) Priorité: 14.02.1997 FR 9701857
(43) Date de publication de la demande: 27.01.1999
(73) Titulaire: VALEO, 75017 Paris (FR)
(72) Inventeur: HEMERYCK, Bruno, F-80160 Belleuse (FR)
(74) Mandataire: Gamonal, Didier
(86) Numéro de dépôt international: FR9800281
(87) Numéro de publication internationale: WO9836188

(56) Documents cités:
- EP-A- 0 155 785
- EP-A- 0 546 557
- DE-A- 4 430 262
- DE-C- 19 526 051
- FR-A- 2 693 778
- FR-A- 2 726 341
- GB-A- 2 190 462
- US-A- 4 586 596

## Description

La présente invention concerne les moyeux pour les dispositifs amortisseurs de torsion comportant un préamortisseur, notamment pour véhicules automobiles.

Elle se rapporte également aux dispositifs amortisseurs de torsion équipés dudit moyeu décrit par exemple dans le document FR-A-2 693 778 (US-A-560 1173) auquel on pourra se reporter pour plus de précisions.

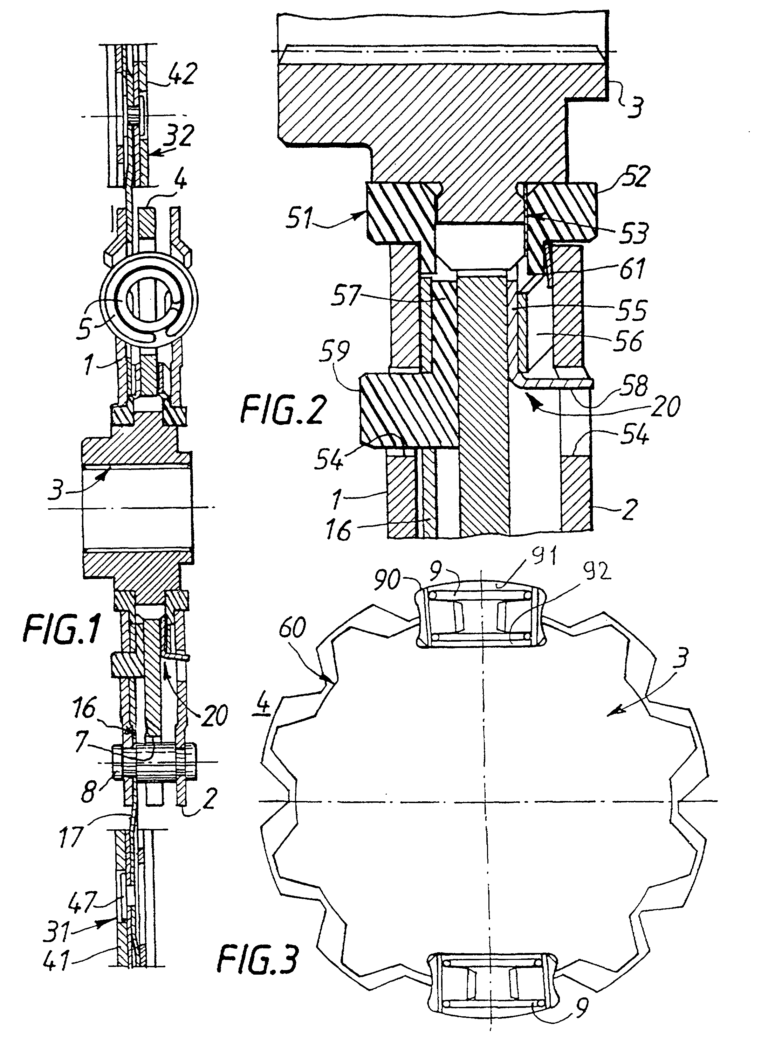

Ainsi qu'on le sait (figures 1 à 3) un tel moyeu 3 forme l'élément de sortie du dispositif amortisseur de torsion. Ce moyeu 3 est entouré par deux rondelles de guidage 1,2 disposées de part et d'autre d'un voile 4 entourant également le moyeu 3 mais avec intervention de moyens d'engrènement à jeu circonférentiel 60 comportant une denture à dents et échancrures alternées, classiquement de forme trapézoïdale, formées à la périphérie externe du moyeu 3 et une denture à dents et échancrures alternées, classiquement de forme trapézoïdale, formées à la périphérie interne du voile 4. Les dents du voile 4 pénètrent à jeu dans les échancrures du moyeu 3 et vice versa. Le moyeu 3 est cannelé intérieurement pour sa liaison en rotation avec un premier arbre.

Les rondelles de guidage 1,2 sont reliées entre elles par des entretoises 8 traversant à jeu circonférentiel des échancrures 7 réalisées à la périphérie externe du voile 4. Les entretoises 8 peuvent avoir une autre forme et peuvent consister en des pattes axiales issues de l'une des rondelles de guidage et fixées par exemple par sertissage à l'autre rondelle de guidage.

Les rondelles de guidage 1,2 sont solidaires de l'élément d'entrée 16 dudit dispositif amortisseur. Cet élément d'entrée 16 est solidaire par exemple d'un plateau de réaction calé en rotation sur un second arbre, soit directement, soit ici indirectement par l'intermédiaire de garnitures de frottement 31,32 fragmentées en plots 41,42 fixées par des rivets 47 sur des pales 17 prolongeant extérieurement l'élément d'entrée 16, en forme de disque. Bien entendu les garnitures 31,32 peuvent être continues. Dans le cas d'une application pour véhicule automobile le premier arbre est usuellement l'arbre d'entrée de la boîte de vitesses et le second arbre le vilebrequin du moteur, les garnitures 31,32 étant destinées à être serrées de manière débrayable entre les plateaux de pression et de réaction d'un embrayage. Pour cette raison le moyeu doit pouvoir coulisser axialement le long du premier arbre.

Le dispositif amortisseur de torsion comporte ici un élément d'entrée 16 accouplé élastiquement à l'élément de sortie 3 (le moyeu) par un amortisseur principal comportant les rondelles de guidage 1,2 et le voile 4 et un préamortisseur comportant le voile 4 et le moyeu 3 (l'élément de sortie).

Des moyens élastiques à action circonférentielle 5,9, ici des ressorts à boudin, et des moyens de frottement à action axiale 20 interviennent entre les rondelles de guidage 1,2 et le moyeu 3.

Les ressorts 5 sont montés dans des fenêtres (non référencées à la figure 1) réalisées en vis-à-vis dans les rondelles 1,2 et le voile 4.

Ces ressorts 5 appartiennent à l'amortisseur principal et sont plus raides que les ressorts 9 appartenant au préamortisseur. Ces ressorts 9 sont montés dans des échancrures ouvertes 91, 92 ménagées en vis-à-vis respectivement à la périphérie interne du voile 4 et à la périphérie externe du moyeu 3.

Les échancrures, globalement en forme de queue d'aronde, et les ressorts 9 s'appuient sur les bords circonférentiels des échancrures par l'intermédiaire de socles 90, dont la face dorsale est en forme de dièdre pour coopérer avec lesdits bords, formant une pointe lorsque le voile 4 et le moyeu 3 sont à l'état de repos. Les faces frontales des socles 90, avantageusement en matière plastique pour réduction des bruits, portent des pions de maintien et de centrage engagés chacun dans un ressort 9 du préamortisseur.

Les moyens de frottement 20 comportent une rondelle élastique 56, ici une rondelle ondulée, prenant appui sur la rondelle de guidage 2 et sur une rondelle d'application 55 au contact du voile 4 pour serrer par réaction une rondelle de frottement 57 entre le voile 4 et le disque 16 accolé à la rondelle de guidage 1. Les rondelles 55 à 57 appartiennent à l'amortisseur principal et interviennent lors d'un mouvement de rotation relatif entre le voile 4 et les rondelles de guidage 1,2. Ce mouvement ne se produit que lorsque le voile 4 vient en prise avec le moyeu 3 après annulation du jeu circonférentiel des moyens d'engrènement à jeu 60, car les ressorts 5 sont plus raides que les ressorts 9 du préamortisseur. Des chocs se produisent ainsi lors de l'annulation du jeu des moyens d'engrènement 60.

Les rondelles d'application 55 et de frottement 57 sont liées en rotation respectivement à la rondelle de guidage 2 et à la rondelle de guidage 1. Pour ce faire ces rondelles 1,2, ici identiques, présentent chacune des trous 54 pour passage de pattes 58 et de pions 59 issus respectivement de la rondelle d'application 55 et de la rondelle de frottement 57 pour réaliser ladite liaison en rotation. Bien entendu les pions 59 traversent chacun une ouverture du disque 16.

Un palier de centrage 51 intervient entre la périphérie externe du moyeu 3 et la périphérie interne de la rondelle de guidage 1. Une rondelle élastique 61, ici une rondelle Belleville, une rondelle de frottement 52 et une rondelle d'interposition métallique 53 interviennent entre la périphérie externe du moyeu 3 et la périphérie interne de la rondelle de guidage 2.

Le palier 51 et la rondelle 52 ont en section une forme de L et présentent des surépaisseurs engagées, de manière connue, chacune dans une échancrure ménagée à la périphérie interne de la rondelle de guidage 1,2 concernée pour liaison en rotation du palier 51 et de la rondelle 52 respectivement avec la rondelle de guidage 1 et la rondelle de guidage 2.

Les pièces 51 à 53 et 61 sont implantées radialement en-dessous des rondelles 55 à 57 de l'amortisseur principal. Ces pièces 51 à 53 et 61 interviennent en permanence lors d'un mouvement relatif entre l'élément d'entrée 16 et l'élément de sortie 3. Le ressort 61 a une raideur plus faible que le ressort 56. Le ressort 61 a une raideur telle qu'il n'oblitère pas l'action des ressorts de faible raideur 9.

Les échancrures de logement des ressorts 9 interrompent les dentures des moyens d'engrènement à jeu circonférentiel 60. Le moyeu 3 présente à sa périphérie externe une bride épaulée dans laquelle est formée la denture du moyeu 3.

Le dispositif amortisseur de torsion fonctionne de la manière suivante lors d'un mouvement relatif entre l'élément d'entrée 16 et l'élément de sortie 3 :
- dans une première étape, les ressorts 5 étant plus raides que les ressorts 9, le préamortisseur intervient seul pour filtrer les vibrations dans le domaine de ralenti du régime moteur en sorte que les ressorts 9 sont comprimés avec mouvement relatif d'une part du voile 4 par rapport au moyeu 3 et, d'autre part, du palier 51 et de la rondelle 52 par rapport au moyeu 3 ; ce mouvement se poursuit jusqu'à ce que les dents du voile 4 viennent en prise avec les dents du moyeu 3 ;
- dans une deuxième étape le voile 4 est solidaire en rotation du moyeu 3 du fait de l'annulation du jeu des moyens d'engrènement à jeu 60 et un mouvement relatif se produit entre les rondelles de guidage 1,2 et le voile 4 à l'encontre de l'action exercée par les ressorts 5 et les rondelles 55 à 57 ; ce mouvement se poursuit jusqu'à venue en butée des entretoises 8 avec le bord des échancrures 7 ou venue à spires jointives des ressorts 5 d'action étagée ici disposés par paire dans les fenêtres du voile 4 et des rondelles de guidage 1,2.

Lorsque les garnitures de friction 31,32 sont libérées, le moyeu 3 coulisse, grâce à ses cannelures de liaison en rotation, axialement le long des cannelures de l'arbre mené.

Ainsi le moyeu 3 doit être suffisamment résistant à sa périphérie externe pour pouvoir coopérer avec le voile 4, qui est une pièce durcie pour logement des ressorts 5. A sa périphérie interne le moyeu 3 doit avoir de bonnes propriétés de coulissement. Ces deux exigences conduisent à un compromis en ce qui concerne le choix du matériau du moyeu 3. Il en est d'autant plus ainsi que le moyeu 3 subit des chocs lorsque les dents du voile 4 viennent en prise avec les dents du moyeu 3.

Le choix de la matière dépend donc des phénomènes de matage qui se produisent ainsi.

En outre, pour une même denture externe le moyeu peut avoir différentes formes, ce qui ne permet pas d'avoir de grandes cadences de fabrication.

En effet l'épaisseur du moyeu est fonction des applications et notamment du diamètre externe de l'arbre avec lequel coopère le moyeu. La position axiale de la bride du moyeu dépend également des applications. On peut songer à la lumière du document EP-A-0 546 557, conforme au préambule de la revendication 1, à réaliser le moyeu en deux parties à savoir une bride et une pièce interne munie à sa périphérie externe d'un voile saillant radialement et à sa périphérie interne de cannelures.

La pièce interne n'a pas une forme aussi simple et économique que souhaité.

En outre la position axiale de la bride est déterminé par le voile saillant.

La présente invention a pour objet, de manière simple et économique, de standardiser le plus possible le moyeu, tout en n'étant pas limité dans le choix de la matière du moyeu.

Suivant l'invention ce problème est résolu par la partie caractérisante de la revendication 1.

Suivant l'invention un dispositif amortisseur de torsion est caractérisé en ce qu'il est équipé d'un tel moyeu.

Grâce à l'invention la bride ou corps externe et la douille interne peuvent avoir des duretés différentes adaptées à leur fonction.

Ainsi la douille peut être en matière ayant de bonnes propriétés de coulissement, tandis que la bride externe peut être en matière ayant la dureté voulue.

Comme la douille est plus longue axialement que la bride, on peut positionner axialement la bride par rapport à la douille en fonction des applications, c'est-à-dire régler son déport axial.

La bride externe est ainsi une pièce standard - identique - en fonction du type de préamortisseur, tandis que la douille interne est une pièce d'adaptation et de support dont l'épaisseur varie en fonction des applications, ainsi que ses cannelures. Ici la longueur de la douille est constante c'est-à-dire standard.

Grâce à l'invention on peut augmenter les cadences de fabrication de la bride.

On appréciera que la douille est une pièce simple et peu coûteuse. Du fait de sa standardisation la bride est également plus économique. Elle permet également de standardiser la denture du voile du dispositif de l'amortisseur de torsion. Bien entendu la forme de la bride dépend du type du préamortisseur.

La bride et la douille peuvent être fabriquées en matériau fritté permettant ainsi d'éviter toute arête vive. La bride peut être emmanchée à force sur la douille collée ou soudée sur celle-ci. En variante on peut réaliser un surmoulage.

La description qui va suivre illustre l'invention en regard des dessins annexés dans lesquels :
- la figure 1 est une demi-vue en coupe axiale d'un dispositif amortisseur de torsion de l'art antérieur ;
- la figure 2 est une vue à plus grande échelle partielle de la partie basse de la figure 1 ;
- la figure 3 est une vue schématique des moyens d'engrènement à jeu intervenant entre le voile et le moyeu de la figure 1 ;
- la figure 4 est une vue en coupe axiale du moyeu selon l'invention
- la figure 5 est une vue en coupe selon la ligne 5-5 de la figure 4 ;
- la figure 6 est une demi-vue en coupe axiale de la bride externe au corps externe de la figure 4 ;
- les figures 7 et 8 sont des demi-vues en coupe axiale de la douille de la figure 4, respectivement pour des tailles maximales et minimales de ses cannelures.

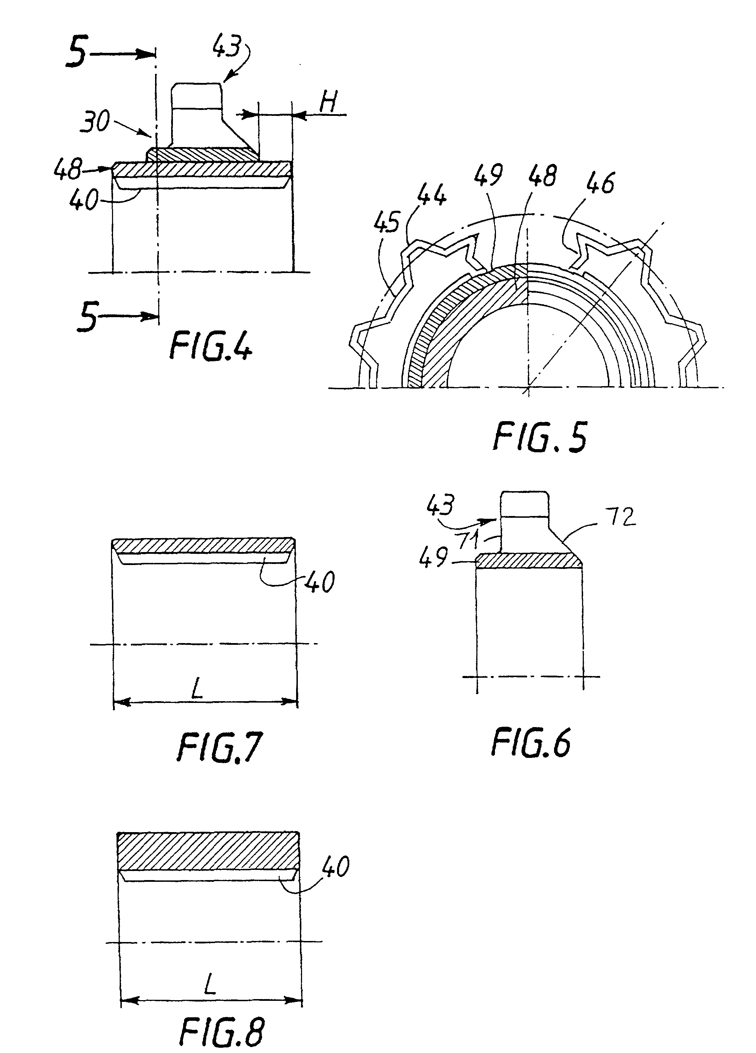

Le moyeu 30 des figures 4 à 8 est métallique et est destiné à remplacer le moyeu 3 des figures 1 à 3.

Ce moyeu 30 appartient donc au préamortisseur du dispositif amortisseur de torsion. Ce moyeu 30 comporte intérieurement une cannelure interne 40 pour sa liaison en rotation, de manière précitée, au premier arbre tel que l'arbre d'entrée de la boîte de vitesses.

A sa périphérie externe le moyeu 30 présente, en saillie radiale vers l'extérieur, une bride 43 externe munie d'une denture à dents 44 et à échancrures 45 appartenant aux moyens d'engrènement à jeu circonférentiel référencés en 60 à la figure 3.

La denture 44,45 est interrompue par des échancrures 46 de même forme que celles de la figure 3.

Le moyeu 30 présente ainsi deux échancrures 46 diamétralement opposées globalement en forme de queue d'aronde, ouvertes vers l'extérieur, et huit dents 44, comme à la figure 3, de forme trapézoïdale séparées les unes des autres par des échancrures 45 plus larges circonférentiellement. Les dents 44 sont destinées à venir en prise avec les dents de la denture du voile 4 des figures 1 à 3 après rattrapage d'un jeu circonférentiel. La denture du voile 4 est avantageusement du type standard.

Il en est de même de la denture de la bride 43 du moyeu 30 suivant une caractéristique de l'invention.

Suivant une autre caractéristique de l'invention les cannelures 40 de liaison en rotation ont une dureté différente de celle de la bride 43 en étant en matière ayant des propriétés différentes.

Plus précisément le moyeu 30 est en deux parties distinctes coaxiales et concentriques à savoir une partie externe 43 entourant une partie interne 48. La partie interne 48 constitue une pièce d'adaptation et est ici en forme de douille interne ayant une longueur axiale standard c'est-à-dire constante. Ces deux parties 43,48 sont ici métalliques.

Cette douille interne 48 est dotée intérieurement des cannelures de liaison en rotation 40 et sert de support pour la partie externe 43 constituée par la bride 43.

On voit (figures 7 et 8) que l'épaisseur de la douille varie ainsi que la taille de ses cannelures 40.

A la figure 7 la douille 48 est montée sur un premier arbre de grand diamètre et à la figure 8 sur un premier arbre de petit diamètre.

La taille de la douille 48, qui est une pièce simple et économique, peut varier entre des deux extrêmes, la longueur axiale L de la douille 48 restant ici la même. Cette douille 48 est plus longue axialement que la bride 43 ou corps externe.

La bride externe 43 présente à sa périphérie interne 49 une forme tubulaire plus longue axialement que la denture 44,45. Il est formé ainsi des épaulements 71,72 latéralement au niveau de la denture 44,45.

L'épaulement 71 sert de face d'appui à la rondelle 53 de la figure 2, tandis que l'épaulement 72 sert de face d'appui au palier 51 de la figure 1.

Dans ce cas le palier 51 a une forme tronconique car la partie interne de l'épaulement 72 est en dessous du fond des échancrures 45 de la denture 44,45 de forme tronconique.

On notera que la périphérie interne 49 de forme tubulaire de la bride 43, dite partie tubulaire 49, délimite le fond des échancrures 46 de logement des ressorts du préamortisseur, qui, de manière connue, au lieu de ressort à boudin, peuvent consister en des blocs élastiques par exemple en élastomère. La partie tubulaire 49 a une plus grande longueur axiale que le reste de la bride 43 en étant de longueur axiale inférieure à celle de la douille 48.

Les échancrures 46 sont plus profondes que les échancrures 45 de la denture 44,45.

La partie tubulaire 49 est emmanchée par sa périphérie interne sur la périphérie externe de la douille interne 48 en étant ainsi en contact intime avec ladite douille 48.

On positionne aisément, grâce à la partie tubulaire 49, la bride 43 par rapport à la douille 48.

On voit à la figure 4 en H la distance variable axialement en fonction des applications entre les extrémités axiales concernées de la douille 48 et de la partie interne tubulaire 49 de la bride 43, qui est ainsi identique pour toutes les applications c'est-à-dire standard.

L'emmanchement de la partie tubulaire 49 sur la douille 48 peut être réalisé à force en sorte que des moyens de blocage axial interviennent entre la bride externe 43 et la douille interne 48 pour éviter tout glissement axial de la bride 43 par rapport à la douille 48.

En variante ces moyens de blocage axial peuvent consister en un surmoulage ou en de la soudure par exemple en deux cordons de soudure intervenant aux extrémités axiales de la partie tubulaire 49.

En variante les moyens de blocage axial peuvent consister en un collage. On peut combiner ces différents modes de réalisation.

Ainsi qu'on l'aura compris la bride 43 peut être plus dure que la douille 48 en matière ayant de bonnes propriétés de coulissement.

La douille 48 et la bride 43 peuvent être en matériau fritté ayant les propriétés souhaitées en sorte que ces pièces ne présentent pas d'arêtes vives et sont faciles à réaliser.

La bride 43 peut être obtenue aisément malgré sa forme. Elle est plus économique que celle des figures 1 à 3 car elle forme une pièce standard c'est-à-dire une forme identique pour un même type de préamortisseur.

Bien entendu la présente invention n'est pas limitée à l'exemple de réalisation décrit. En particulier la bride métallique 43 peut être obtenue par matriçage ou décolletage. La douille 48 n'est pas forcément métallique elle peut être en matière plastique renforcée par exemple par des fibres. Dans tous les cas la douille 48 doit transmettre le couple, les moyens de blocage axial sont choisis pour transmettre également le couple et c'est la raison pour laquelle ils consistent ici en un emmanchement à force, en un collage ou en un soudage ou en un surmoulage.

Bien entendu on peut combiner l'emmanchement à force avec le soudage et/ou le collage. Les moyens de blocage axial constituent donc des moyens de blocage en rotation de la douille 48 par rapport à la bride 43.

La partie tubulaire 49 de la bride est suffisamment longue pour permettre le montage à fixation d'un voile secondaire appartenant au préamortisseur comme décrit dans le document FR-A-2 726 341.

Dans ce cas les ressorts de faible raideur sont implantés axialement entre le voile 4 et l'une des rondelles de guidage 1,2.

Ainsi la bride ne comporte pas forcément des échancrures de logement des ressorts de faible raideur. Cette bride est standard pour chaque type de préamortisseur.

Bien entendu on peut déposer une couche de nickel dans la zone des cannelures 40 de la douille 48 afin d'éviter l'usure et la formation de rouille conduisant à un risque de grippage. Le dépôt peut être réalisé après brochage des cannelures 40 et consister en un dépôt chimique conduisant à une métallisation chimique.

On peut déposer une couche de nickel de la même manière sur la denture de la bride. Par un traitement thermique on peut porter la dureté de cette couche à une résistance supérieure.

La couche de nickel peut présenter une teneur en phosphore comprise entre 2 et 15%.

L'épaisseur de la couche est avantageusement très faible, par exemple inférieure à 20 microns.

En dehors de la couche de nickel, on peut réaliser une phosphatation.

## Revendications

1. Moyeu pour préamortisseur d'un dispositif amortisseur à moyens d'engrènement à jeu (60), notamment pour véhicule automobile, comportant deux parties distinctes et coaxiales à savoir extérieurement une bride (43) externe dotée extérieurement d'une denture à dents (44) et échancrures (45) appartenant aux moyens d'engrènement à jeu (60) et intérieurement une partie interne plus longue axialement que la bride externe et dotée intérieurement des cannelures (40) de liaison en rotation pour liaison en rotation du moyeu (30) avec un arbre, **caractérisé en ce que** la pièce interne est une douille interne (48), **en ce que** la bride (43) a, à sa périphérie interne, une forme tubulaire (49) de plus grande longueur axiale que le reste de la bride externe (43) avec formation latéralement d'épaulements (71, 72) au niveau de la denture (44, 45)et **en ce que** la périphérie interne (49) de la bride externe (43) est emmanchée sur la périphérie externe de la douille interne (48), avec intervention de moyens de blocage axial pour éviter tout glissement axial de la bride externe (43) par rapport à la douille interne (48).

2. Moyeu selon la revendication 1, **caractérisé en ce que** les moyens de blocage axial constituent des moyens de blocage en rotation de la bride externe (43) par rapport à la douille interne (48).

3. Moyeu selon la revendication 1 ou 2, **caractérisé en ce que** les moyens de blocage axial consistent en un emmanchement à force.

4. Moyeu selon la revendication 1 ou 2, **caractérisé en ce que** les moyens de blocage axial consistent en un soudage.

5. Moyeu selon la revendication 1 ou 2, **caractérisé en ce que** les moyens de blocage consistent en un collage.

6. Moyeu selon la revendication 1 ou 2, **caractérisé en ce que** les moyens de blocage axial consistent en un surmoulage.

7. Moyeu selon l'une quelconque des revendications précédentes, **caractérisé en ce que** la douille interne (48) forme une pièce d'adaptation variable en épaisseur, tandis que la bride externe (43) est standard - identique - en fonction du type de préamortisseur.

8. Moyeu selon la revendication 7, **caractérisé en ce que** la douille interne (48) a une longueur constante.

9. Moyeu selon l'une quelconque des revendications précédentes, **caractérisé en ce qu'**un voile secondaire appartenant au préamortisseur est fixé sur la périphérie interne (49) de forme tubulaire de la bride externe.

10. Moyeu selon l'une quelconque des revendications 1 à 8, **caractérisé en ce que** la bride externe (43) comporte des échancrures (46) pour logement de moyens élastiques à action circonférentielle de faible raideur.

11. Moyeu selon l'une quelconque des revendications précédentes, **caractérisé en ce que** la périphérie interne (49) de la forme tubulaire de la bride (43) délimite le fond des secondes échancrures (46).

12. Dispositif amortisseur de torsion comportant un voile (4) entourant un moyeu (3) avec intervention de moyens d'engrènement à jeu (60) entre la périphérie interne du voile (4) et la périphérie externe du moyeu (3), **caractérisé en ce qu'**il comporte un moyeu (3) selon la revendication 1.

## Patentansprüche

1. Nabe für einen Vordämpfer einer Dämpfungsvorrichtung mit mit Spiel wirksamen Eingriffsmitteln (60), insbesondere für Kraftfahrzeuge, umfassend zwei getrennte und koaxiale Teile, und zwar außen einen äußeren Flansch (43), der außen mit einer Zahnung mit Zähnen (44)) und Aussparungen (45) versehen ist, die zu den mit Spiel wirksamen Eingriffsmitteln (60) gehören, und innen einen inneren Teil, der axial länger als der äußere Flansch und innen mit Drehverbindungsnuten (40) für die drehfeste Verbindung der Nabe (30) mit einer Welle versehen ist, **dadurch gekennzeichnet, daß** das innere Teil eine innere Hülse (48) ist, daß der Flansch (43) an seinem inneren Umfang eine Rohrform (49) mit einer größeren axialen Länge als der Rest des äußeren Flansches (43) mit seitlicher Bildung von Schultern (71, 72) in Höhe der Zahnung (44, 45) aufweist und daß der innere Umfang (49) des äußeren Flansches (43) auf dem äußeren Umfang der inneren Hülse (48) unter Einfügung von axialen Sicherungsmitteln aufgesteckt ist, um jedes axiale Verrutschen des äußeren Flansches (43) im Verhältnis zur inneren Hülse (48) zu verhindern.

2. Nabe nach Anspruch 1, **dadurch gekennzeichnet, daß** die axialen Sicherungsmittel Mittel zur Drehsicherung des äußeren Flansches (43) im Verhältnis zur inneren Hülse (48) bilden.

3. Nabe nach Anspruch 1 oder 2, **dadurch gekennzeichnet, daß** die axialen Sicherungsmittel aus einer festen Aufpressung bestehen.

4. Nabe nach Anspruch 1 oder 2, **dadurch gekennzeichnet, daß** die axialen Sicherungsmittel aus einer Verschweißung bestehen.

5. Nabe nach Anspruch 1 oder 2, **dadurch gekennzeichnet, daß** die Sicherungsmittel aus einer Verklebung bestehen.

6. Nabe nach Anspruch 1 oder 2, **dadurch gekennzeichnet, daß** die axialen Sicherungsmittel aus einer Aufformung bestehen.

7. Nabe nach einem der vorangehenden Ansprüche, **dadurch gekennzeichnet, daß** die innere Hülse (48) ein in der Dicke veränderliches Anpaßstück bildet, während der äußere Flansch (43) standardmäßig - identisch - in Abhängigkeit von der Bauart des Vordämpfers ist.

8. Nabe nach Anspruch 7, **dadurch gekennzeichnet, daß** die innere Hülse (48) eine konstante Länge aufweist.

9. Nabe nach einem der vorangehenden Ansprüche, **dadurch gekennzeichnet, daß** eine zum Vordämpfer gehörende Sekundärzwischenscheibe am rohrförmigen inneren Umfang (49) des äußeren Flansches befestigt ist.

10. Nabe nach einem der Ansprüche 1 bis 8, **dadurch gekennzeichnet, daß** der äußere Flansch (43) Aussparungen (46) für die Aufnahme von umfangsmäßig wirksamen elastischen Mitteln mit geringer Steifigkeit umfaßt.

11. Nabe nach einem der vorangehenden Ansprüche, **dadurch gekennzeichnet, daß** der innere Umfang (49) der Rohrform des Flansches (43) den Boden der zweiten Aussparungen (46) begrenzt.

12. Torsionsdämpfungsvorrichtung, umfassend eine Zwischenscheibe (4), die eine Nabe (3) unter Einfügung von mit Spiel wirksamen Eingriffsmitteln (60) zwischen dem inneren Umfang der Zwischenscheibe (4) und dem äußeren Umfang der Nabe (3) umgibt, **dadurch gekennzeichnet, daß** sie eine Nabe (3) nach Anspruch 1 umfaßt.

## Claims

1. A hub for a predamper of a damping device having loose coupling means (60), especially for a motor vehicle, comprising two distinct coaxial parts, namely on the outside, an external flange (43) having externally a denture consisting of teeth (44) and recesses (45) which are part of the loose coupling means (60), and on the inside, an internal portion which is longer axially than the external flange and which has internal rotary coupling splines (40) for coupling the hub (30) in rotation with a shaft, **characterised in that** the internal member is an internal sleeve (48), **in that** the flange (43) has at its inner periphery a tubular form (49) of longer axial length than the remainder of the external flange (43) , defining lateral shoulders (71, 72) in the region of the denture (44, 45) , and **in that** the inner periphery (49) of the external flange (43) is telescoped over the outer periphery of the internal sleeve (48), with axial stop means being operatively interposed to prevent any axial sliding movement of the external flange (43) with respect to the internal sleeve (48).

2. A hub according to Claim 1, **characterised in that** the axial stop means constitute means for preventing rotation of the external flange (32) with respect to the internal sleeve (48).

3. A hub according to Claim 1 or Claim 2, **characterised in that** the axial stop means consist of a force-fitted connection.

4. A hub according to Claim or Claim 2, **characterised in that** the axial stop means consist of a weld.

5. A hub according to Claim 1 or Claim 2, **characterised in that** the stop means consist of an adhesive bond.

6. A hub according to Claim 1 or Claim 2, **characterised in that** the axial stop means consist of a superimposed moulding.

7. A hub according to any one of the preceding Claims, **characterised in that** the internal sleeve (48) constitutes an adapter member of variable thickness, while the external flange (43) is standard - identical - according to the type of predamper.

8. A hub according to Claim 7, **characterised in that** the internal sleeve (48) is of constant length.

9. A hub according to any one of the preceding Claims, **characterised in that** a secondary damper plate of the predamper is fixed on the tubular inner periphery (49) of the external flange.

10. A hub according to any one of Claims 1 to 8, **characterised in that** the external flange (43) includes notches (46) for receiving circumferentially acting resilient means of low stiffness.

11. A hub according to any one of the preceding Claims, **characterised in that** the tubular inner periphery (49) of the flange (43) delimits the base of the second recesses (46).

12. A torsion damping device comprising a damper plate (4) surrounding a hub (3), with loose coupling means (60) interposed between the inner periphery of the damper plate (4) and the outer periphery of the hub (3), **characterised in that** it includes a hub (3) according to Claim 1.
